# EUROPÄISCHE PATENTSCHRIFT

(11) **EP 0 520 280 B1**
(45) Veröffentlichungstag und Bekanntmachung des Hinweises auf die Patenterteilung: **16.10.1996**
(21) Anmeldenummer: 92110061.6
(22) Anmeldetag: 15.06.1992
(51) Int. Cl.: B65D 65/46, B32B 7/06, B65D 65/38

(54) **Schichtstoffmaterial mit latent inhärentem Delaminierungspotential**
Laminated material with latent inherent delamination potential
Matériau laminé à potentiel de délamination inhérent latent

(30) Priorität: 22.06.1991 DE 4120685
(43) Veröffentlichungstag der Anmeldung: 30.12.1992
(73) Patentinhaber: HOECHST AKTIENGESELLSCHAFT, 65926 Frankfurt am Main (DE)
(72) Erfinder: Beer, Ekkehard, W-6208 Bad Schwalbach (DE); Gribbin, John Derek, Dr., W-6229 Schlangenbad 2 (DE); Krause, Günter, W-6238 Hofheim-Wallau (DE); Rentzsch, Tobias, Dr., W-6380 Bad Homburg (DE)

(56) Entgegenhaltungen:
- EP-A- 0 010 171
- GB-A- 2 082 217
- US-A- 3 855 050
- Week 8839, Derwent Publications Ltd., London, GB; AN 88-275352

## Beschreibung

Die vorliegende Erfindung betrifft ein Schichtstoffmaterial enthaltend wenigstens eine Schicht aus thermoplastischem Kunststoff mit latent inhärentem Delaminierungspotential und ein Verfahren zur Durchführung der Delaminierung.

Thermoplastische Kunststoffe werden in der Technik zu den verschiedensten Zwecken und vor allem auf dem direkten und indirekten Verpakkungssektor gerne und in außerordentlich großem Umfang zu den verschiedensten Zwecken eingesetzt, weil sie günstige mechanische und physikalische Eigenschaften besitzen, weil sie sich besonders leicht durch automatische Verarbeitungsmaschinen verformen lassen und vor allem weil ihnen durch Einfärbung, Bedruckung und/oder Metallisierung leicht ein optisches Erscheinungsbild verliehen werden kann, das das ästhetische Empfinden der Menschen in besonders angenehmer Weise anspricht und nach dem Willen der Hersteller und Anbieter bei den Endverbrauchern den Eindruck hochwertiger Qualität entstehen läßt. Bedingt durch die außerordentlich umfangreiche Anwendung derartiger thermoplastischer Kunststoffe wachsen bei den Herstellern, den Weiterverarbeitern und den Endverbrauchern größere Mengen an Verschnittmaterial oder Reststoffen an, die nicht in vollem Umfang in den Produktions- oder Weiterverarbeitungsprozess zurückgeführt werden können, zumal die Kunststoffe teilweise auch noch mit anderen Materialien wie nicht artgleichen Kunststoffen, Papier, Pappe, Metall und/oder Druckfarben zu Schichtaufbauten zusammengefügt sind. Derartige Verschnittmaterialien oder Reststoffe, die umgangssprachlich oft auch als Recyclingmaterial (-potential) bezeichnet werden, müssen gesammelt und dann durch aufwendige Methoden in artgleiche Materialien aufgetrennt werden, was in der Praxis nicht immer in vollem Umfang gelingt und sich schon garnicht routinemäßig in vollautomatischen Anlagen durchführen läßt.

Aufgabe der vorliegenden Erfindung war es, ein Schichtstoffmaterial zu schaffen, das hervorragende Hafteigenschaften der Schichten untereinander aufweist, das aber nach seinem bestimmungsgemäßen Einsatz in der Technik, auf dem Verpackungssektor oder - wie z.B. Prägefolien - sonst mit einfachen Mitteln und schnell in seine Einzelkomponenten zerlegt werden kann.

Gelöst wird diese Aufgabe durch ein Schichtstoffmaterial nach Anspruch 1.

Die erfindungsgemäßen Schichtstoffmaterialien können als Verpackungsmaterialien beispielsweise weitere Schichten aus artfremdem Kunststoff, Papier, Pappe oder papierähnlichen Materialien wie aufgerauhte Kunststoffe oder opake Kunststoffe enthalten. Erfindungsgemäß ist es auch möglich, die Schicht aus thermoplastischem Kunststoff mit weiteren funktionellen Schichten, beispielsweise Trennschichten oder Dekorschichten oder Metallschichten oder Metallisierungen zusammenzufügen, welche auch durch Beschichtung aufgebracht werden können.

Alle erfindungsgemäßen Schichtstoffmaterialien besitzen ein latent inhärentes Delaminierungspotential, das auf die unmittelbar mit der Schicht aus thermoplastischem Kunststoff verbundene Trennschicht zurückzuführen ist. Unter einem latent inhärenten Delaminierungspotential ist eine Aufspaltbarkeit des Schichtstoffmaterials in seine Einzelbestandteile zu verstehen, die zwar als Materialeigenschaft vorhanden ist, aber nicht unmittelbar, sondern mittelbar, d.h. sie bedarf erst einer entsprechenden Aktivierung. Ohne die entsprechende Aktivierung sind die einzelnen Schichten des erfindungsgemäßen Schichtstoffmaterials festhaftend miteinander verbunden und erfüllen ihren bestimmungsgemäßen Verwendungszweck als Verpakkungsmaterialien, Dekormaterialien, Prägefolien, Übertragungsfolien usw. wie andere Schichtstoff zusammensetzungen auch, die kein latent inhärentes Delaminierungspotential in Sinne der vorliegenden Erfindung besitzen.

Als thermoplastische Kunststoffe können im Rahmen der Erfindung Materialien wie Polyvinylchlord, Polyolefine wie Polyethylen hoher oder geringer Dichte, Polypropylen oder Copolymere bzw. Mischungen von diesen, Polyester wie Polyethylenterephthalat, Polytetramethylenterephthalat, polyethylenisophthalat, Polyethylennaphthalat usw., Polystyrol und substituierte Polystyrole, Polyamide wie Polyhexamethylenadipinsäureamid, Poly-epsilon-caprolactam oder Polyhexamethylensebacinsäureamid, Polyphenylensulfide oder ähnliche sowie Copolymere oder Mischungen von diesen erfolgreich zum Einsatz kommen, bevorzugt sind Polyester, besonders bevorzugt Polyethylenterephthalat.

Die Trennschicht kann auf der Schicht aus einem oder mehreren der thermoplastischen Kunststoffe ein- oder beidseitig angeordnet sein. Das Auftragen der Trennschicht geschieht zweckmäßigerweise aus wäßriger Lösung oder Dispersion, wobei sich die Dicke der Trennschicht bequem im Bereich zwischen 0,001 bis 5,0 µm, vorzugsweise im Bereich von 0,01 bis 2,5 µm, einstellen läßt, ganz besonders bevorzugt von 0,02 bis 0,5 µm.

Die wasserlöslichen oder wasserdispergierbaren organischen Materialien können polymere oder monomere Verbindungen sein. Als wasserlösliche Polymere sind beispielsweise Polyvinylacetat, das zu 90 % und mehr verseift ist, oder Polyvinylpyrrolidon zu nennen oder es kommen Copolymere von Ethylen mit verseiftem Polyvinylacetat oder Copolykondensate aus Isophthalsäure und Sulfoisophthalsäure, insbesondere 5-Sulphoisophthalsäure, und Ethylenglykol in Betracht. Ferner können wasserdispergierbare Polyurethane oder Copolymere aus Acrylaten und Methacrylaten vorteilhaft eingesetzt werden. Auch monomeres Natriumoleat hat sich in der Praxis bewährt.

Bevorzugt ist ein Copolykondensat aus 60 bis 90 Mol.-% Isophthalsäure und 10 bis 40 Mol.-% Sulphoisophthalsäure mit Ethylenglykol, weil dieses Copolykondensat als solgute Hafteigenschaften gegenüber weiteren Beschichtungen und funktionellen Schichten und gegenüber Papier besitzt und außerdem gut wasserlöslich ist.

Gegenstand der Erfindung ist auch ein Verfahren zur Durchführung der Delaminierung des erfindungsgemäßen Schichtstoffmaterials, bei dem das gesamte Material zunächst in kleine Plättchen gehäckselt und dann mit Wasser behandelt wird.

Zur Unterstützung des Delaminierungsprozesses, für die meist selbst wasserunlöslichen Schichten, wird das gehäckselte Material in einen Behälter eingebracht, der mit einem im turbulenten Strömungsbereich arbeitenden Rührwerk ausgerüstet ist, welches die zur Trennung erforderlichen mechanischen Scherkräfte erzeugt. Das darin als Lösungsmittel befindliche Wasser oder der gesättigte Wasserdampf quillt die funktionelle wasserlösliche Trennschicht, die in dem erfindungsgemäßen Schichtstoffmaterial auf wenigstens einer Seite der Schicht aus thermoplastischem Kunststoff angeordnet ist, von den Kanten her an und die mechanische Beanspruchung durch den Rührer führt zu einer Separierung an den durch die gezielt vorgenommenen Anordnungen der Trennschichten gewünschten Spaltungsebenen. Der Delaminierungsprozesses kann durch Erwärmung des Wasserbades beziehungweise durch Zugabe von spezifischen Tensiden, Enzymen oder auch gegebenenfalls durch Laugen und Säuren weiter beschleunigt werden. Auch erwirkt die Unterstützung des mechanischen Rührwerkes durch zusätzliches pneumatisches Verwirbeln des gehäckselten Materials eine höhere Effizienz des Delaminierungsprozesses.

Aus dem einer groben Suspension vergleichbaren heterogenen System von Wasser und Feststoffplättchen werden erfindungsgemäß die Feststoffe abgetrennt und, wenn möglich, gleichzeitig separiert. Unter Ausnutzung der spezifischen Gewichte und/oder der Oberflächeneigenschaften der einzelnen vorher festhaftend miteinander verbundenen Schichten des erfindungsgemäßen Schichtstoffverbundes und der nach der Delaminierung vorliegenden Gestalt der Einzelplättchen, können bestehende Flotations-, Sedimentier- bzw. Dekantier- und Filtrationsverfahren angewandt werden. Hierdurch ist es auch möglich, Materialien gleichen spezifischen Gewichts, z.B. PVC und PET, zu separieren. Eine weitere Klassifizierung der Stoffarten kann gegebenenfalls mit Hilfe einer Windsichtung erfolgen. Gleichzeitig kann damit die erforderliche Trocknung der unterschiedlichen Materialplättchen verbunden werden, um diese riesel-, schütt- und dosierfähig zu machen.

Die nach dem erfindungsgemäßen Verfahren wiedergewonnenen Einzelmaterialien können stoffspezifisch bequem für weitere Herstellungs- oder Verwendungsprozesse eingesetzt werden.

Nachfolgend wird die Erfindung beispielhaft anhand einer Zeichnung noch näher verdeutlicht, ohne jedoch auf die konkret dargestellte Ausführungsform beschränkt zu sein.

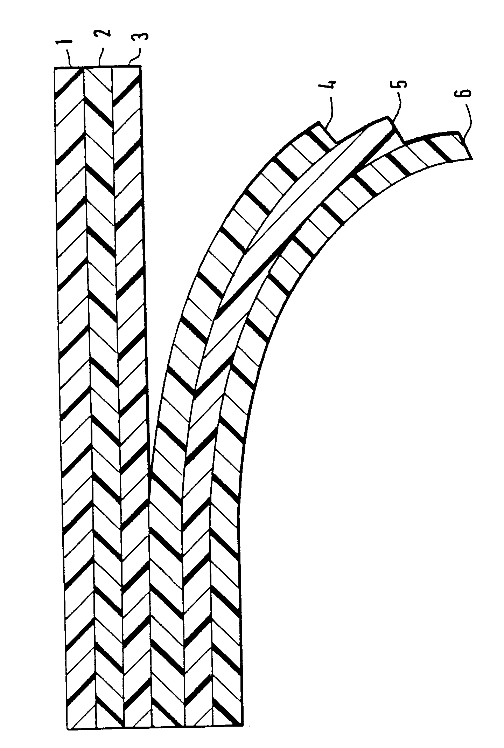

Die einzige Figur zeigt einen senkrechten Schnitt durch einen Schichtstoffverbund, der beispielsweise für eine Prägefolie verwendet werden kann, in seitlicher Ansicht.

Mit Bezugsziffern sind die Trägerfolie 1 aus thermoplastischem Kunststoff und die einseitig darauf angeordnete Trennschicht 2 aus wasserlöslichem Material hervorgehoben. Auf der Trennschicht 2 ist eine weitere Ablöseschicht 3 aus antiadhäsivem, insbesondere silikonisiertem Material angeordnet, die üblicherweise notwendig ist um beispielsweise Dekorschichten auf ein Substrat aufzuprägen. Auf die Ablöseschicht 3 ist eine Grundlackierung 4 aufgetragen und eine Dekorschicht 5, die eine Farbschicht, eine Metallisierung oder ein Druckbild, insbesondere ein Holzdekordruck, sein kann. Auf der freien Oberfläche der Dekorschicht 5 befindet sich in der Darstellung eine Haftschicht 6, die insbesondere einen thermosensitiver Kleber enthalten kann und mit deren Hilfe die Dekorschicht 5 mit der Grundlackierung 4 auf einem nicht dargestellten Substrat durch Aufprägen befestigt werden kann.

## Patentansprüche

1. Schichtstoffmaterial mit latent inhärentem Delaminierungspotential, umfassend eine erste (1), eine zweite (2) und eine dritte Schicht (3), die in der genannten Reihenfolge aufeinanderfolgen, und gegebenenfalls weitere Schichten (4, 5 und/oder 6), wobei die erste Schicht (1) aus thermoplastischem Kunststoff besteht, die zweite Schicht (2) eine Trennschicht aus wasserdampflöslichem, wasserlöslichem oder wasserdispergierbarem organischen Material ist,und die weiteren Schichten beispielsweise aus artfremdem Kunststoff, opakem Kunststoff oder, Metall bestehen oder Dekorschichten sind.

2. Schichtstoffmaterial nach Anspruch 1, dadurch gekennzeichnet, daß es als thermoplastischen Kunststoff Polyvinylchlorid, Polyolefine wie Polyethylen hoher oder geringer Dichte, Polypropylen oder Copolymere bzw. Mischungen von diesen, Polyester wie Polyethylenterephthalat, Polytetramethylenterephthalat, Polyethylenisophthalat, Polyethylennaphthalat usw., Polystyrol und substituierte Polystyrole, Polyamide wie Polyhexamethylenadipinsäureamid, Poly-epsilon-caprolactam oder Polyhexamethylensebacinsäureamid, Polyphenylensulfide oder ähnliche sowie Copolymere oder Mischungen von diesen enthält, vorzugsweise Polyethylenterephthalat.

3. Schichtstoffmaterial nach einem der Ansprüche 1 und 2, dadurch gekennzeichnet, daß die Dicke der Trennschicht im Bereich zwischen 0,001 bis 5,0 µm, vorzugsweise im Bereich von 0,01 bis 2,5 µm, liegt, besonders bevorzugt von 0,02 bis 0,5 µm.

4. Schichtstoffmaterial nach einem der Ansprüche 1 bis 3, dadurch gekennzeichnet, daß es als wasserlösliche oder wasserdispergierbare organische Materialien polymere oder monomere Verbindungen enthält, beispielsweise wasserlösliches Polyvinylacetat, das zu 90 % und mehr verseift ist, oder Polyvinylpyrrolidon oder Copolymere von Ethylen mit verseiftem Polyvinylacetat oder Copolykondensate aus Isophthalsäure und Sulfoisophthalsäure, insbesondere 5-Sulphoisophthalsäure, und Ethylenglykol oder wasserdispergierbare Polyurethane oder wasserdispergierbare Copolymere aus Acrylaten und Methacrylaten oder monomeres Natriumoleat.

5. Verfahren zur Delaminierung eines Schichtstoffmaterials nach einem der Ansprüche 1 bis 4, dadurch gekennzeichnet, daß das gesamte Material zunächst in kleine Plättchen gehäckselt und dann mit Wasser oder Wasserdampf behandelt wird.

6. Verfahren nach Anspruch 5, dadurch gekennzeichnet, daß das gehäckselte Material in einen Behälter eingebracht wird, der mit einem im turbulenten Strömungsbereich arbeitenden Rührwerk ausgerüstet ist.

7. Verfahren nach Anspruch 5 oder 6, dadurch gekennzeichnet, daß das Wasser erwärmt wird.

8. Verfahren nach einem der Ansprüche 5 bis 7, dadurch gekennzeichnet, daß dem Wasser zusätzlich spezifische Tenside, Enzyme oder gegebenenfalls Laugen oder Säuren zugegeben werden.

## Claims

1. Laminated material having a latent inherent delamination potential, comprising a first (1), a second (2) and a third (3) layer which are superimposed in the above order of sequence, and optionally further layers (4,5 and/or 6), whereby the first layer (1) is made of a thermoplastic material, the second layer (2) is a release layer of a steam-soluble, water-soluble or water-dispersible organic material, and the further layers are comprised, for example, of another type of plastic material, of an opaque plastic material or metal or are decorative layers.

2. The laminated material as claimed in claim 1, which contains, as the thermoplastic, polyvinyl chloride, polyolefins, such as high- or low-density polyethylene, polypropylene or copolymers or mixtures thereof, polyesters, such as polyethylene terephthalate, polytetramethylene terephthalate, polyethylene isophthalate, polyethylene naphthalate, etc., polystyrene and substituted polystyrenes, polyamides, such as polyhexamethyleneadipamide, poly-epsilon-caprolactam or polyhexamethylenesebacamide, polyphenylene sulfides or the like, and copolymers or mixtures thereof, preferably polyethylene terephthalate.

3. The laminated material as claimed in claim 1 or 2, wherein the thickness of the release layer is in the range between 0.001 and 5.0 µm, preferably in the range from 0.01 to 2.5 µm, particularly preferably from 0.02 to 0.5 µm.

4. The laminated material as claimed in any of claims 1 to 5, which contains, as water-soluble or water-dispersible organic materials, polymeric or monomeric compounds, for example water-soluble polyvinyl acetate which is hydrolyzed to an extent of 90% or more, or polyvinylpyrrolidone or copolymers of ethylene with hydrolyzed polyvinyl acetate or copolycondensates of isophthalic acid and sulfoisophthalic acid, in particular 5-sulfoisophthalic acid, and ethylene glycol or water-dispersible polyurethanes or water-dispersible copolymers of acrylates and methacrylates or monomeric sodium oleate.

5. A process for the delamination of a laminated material as claimed in any of claims 1 to 4, wherein the total material is first chopped into small chips and then treated with water or steam.

6. A process as claimed in claim 5, wherein the chopped material is introduced into a container which is equipped with a stirrer which operates in the turbulent flow range.

7. A process as claimed in claim 5 or 6, wherein the water is heated.

8. A process as claimed in any of claims 5 to 7, wherein specific surfactants, enzymes or, if required, alkalis or acids are also added to the water.

## Revendications

1. Matériau laminé à potentiel de délamination inhérent latent, comprenant une première (1), une deuxième (2) et un troisième (3) couche, qui se suivent les unes les autres dans cet ordre, et le cas échéant des couches supplémentaires (4, 5 et/ou 6), dans lequel la première couche (1) est constituée de matière thermoplastique, la deuxième couche (2) est une couche de séparation constituée d'un matériau organique soluble dans la vapeur d'eau, soluble dans l'eau ou dispersible dans l'eau, et les couches supplémentaires sont par exemple constituées de matières plastiques d'un autre type, de matière plastique opaque ou de métal ou sont des couches de décor.

2. Matériau laminé selon la revendication 1, caractérisé en ce qu'il contient comme matériau thermoplastique du polychlorure de vinyle, des polyoléfines comme le polyéthylène de haute ou basse densité, du polypropylène ou des copolymères et des mélanges de ceux-ci, des polyesters comme le polytéréphtalate d'éthylène, le polytéréphtalate de tétraméthylène, le polyisophtalate d'éthylène, le polynaphtalate d'éthylène etc., du polystyrène et des polystyrènes substitués, des polyamides comme le polyamide d'acide hexaméthylèneadipique, le poly-epsilonpolycaprolactame ou le polyamide d'acide hexaméthylènesébacique, des sulfures de polyphénylène ou analogues ainsi que des copolymères ou des mélanges de ceux-ci, les polyesters sont préférés, de préférence le polytéréphtalate d'éthylène.

3. Matériau laminé selon l'une des revendications 1 et 2, caractérisé en ce que l'épaisseur de la couche de séparation se situe dans le domaine de 0,001 à 5,0 µm, de préférence dans le domaine d e 0,01 à 2,5 µm, de manière tout à fait préférentielle de 0,02 à 0,5 pm.

4. Matériau laminé selon l'une des revendications 1 à 3, caractérisé en ce qu'il contient en tant que matériaux organiques solubles dans l'eau ou dispersibles dans l'eau des composés polymères ou monomères, par exemple de l'acétate de polyvinyle qui est saponifié à 90% ou plus, ou la polyvinylpyrrolidone, ou bien des copolymères d'éthylène avec de l'acétate de polyvinyle saponifié, ou des copolycondensats d'acide isophtalique et d'acide sulfoisophtalique, en particulier l'acide 5-sulfoisophtalique, et d'éthylèneglycol ou des polyuréthannes dispersibles dans l'eau ou des copolymères d'acrylates et de méthacrylates dispersibles dans l'eau ou le monomère de l'oléate de sodium.

5. Procédé de délamination d'un matériau laminé selon l'une des revendications 1 à 4, caractérisé en ce que i'ensemble du matériau est d'abord haché en petites plaquettes et ensuite est traité avec de l'eau ou de la vapeur d'eau.

6. Procédé selon la revendication 5, caractérisé en ce que l'on place le matériau haché dans un récipient, qui est équipé d'un agitateur fonctionnant en régime turbulent.

7. Procédé selon la revendication 5 ou 6, caractérisé en ce que l'on chauffe l'eau.

8. Procédé selon l'une des revendications 5 à 7, caractérisé en ce que l'on ajoute à l'eau des agents tensioactifs spécifiques, des enzymes, ou le cas échéant, des bases ou des acides.
